# EUROPÄISCHE PATENTSCHRIFT

(11) **EP 3 674 190 B1**
(45) Veröffentlichungstag und Bekanntmachung des Hinweises auf die Patenterteilung: **11.05.2022**
(21) Anmeldenummer: 18215863.4
(22) Anmeldetag: 24.12.2018
(51) Int. Cl.: B62J 23/00, B62K 19/40, B62J 11/13

(54) **RAHMENROHRSCHUTZ UND FAHRRAD**
FRAME TUBE PROTECTION AND BICYCLE
PROTECTION DE CADRE TUBULAIRE ET BICYCLETTE

(43) Veröffentlichungstag der Anmeldung: 01.07.2020
(73) Patentinhaber: GHOST-Bikes GmbH, 95652 Waldsassen (DE)
(72) Erfinder: Ackermann, Volker, 95643 Tirschenreuth (DE)
(74) Vertreter: V.O.

(56) Entgegenhaltungen:
- EP-A1- 1 580 104
- EP-A1- 2 060 478
- EP-A1- 2 824 024
- WO-A1-2010/139529
- DE-C1- 3 915 897
- JP-A- 2000 302 074
- JP-U- S5 977 679

## Beschreibung

Vorliegende Erfindung betrifft einen Rahmenrohrschutz zum lösbaren Abringen an ein zu schützendes Rahmenrohr und insbesondere Unterrohr eines Fahrradrahmens.

Solche Rahmenrohrschützer sind aus dem Stand der Technik bekannt. Sie dienen insbesondere dem Steinschlagschutz der Rahmenrohre von Fahrradrahmen. Anwendung finden sie aber auch, wenn Fahrräder gegen Transportschäden, beispielsweise beim Transport der Fahrräder auf Fahrradträgern an Autos und insbesondere auf Ladeflächen von Pickups, geschützt werden sollen. Hier ist insbesondere das Unterrohr ein Bereich des Fahrradrahmens, der geschützt werden soll, sodass solche Rahmenrohrschützer sehr häufig an Unterrohren von Fahrradrahmen montiert werden.

Aus dem Stand der Technik ist es bekannt, einen solchen Rahmenrohrschutz so anzuordnen, dass er auch am Rahmenrohr geführte Kabelzüge, das sind beispielsweise Schaltzüge, Bremszüge, Hydraulikleitungen, aber auch elektrische Leitungen, Kabel, Sensorleitungen etc. überdeckt und schützt. Diese Kabelzüge werden nach dem Stand der Technik meist am jeweiligen Rahmenrohr befestigt, um so beispielsweise zwischen Stellelementen und korrespondierenden Aktuatoren geführt zu werden. Dies können beispielsweise ein Schalthebel am Lenker und ein Schaltwert am hinteren Teil des Fahrradrahmens oder ein Stellhebel am Vorbau und eine hydraulisch verstellbare Sattelstütze sein.

Bei der Montage von Fahrrädern, stellt die Montage von solchen Kabelzügen, Aktuatoren, Stellelementen, in ihrer Gesamtheit als Stellelement-Aktuator-Einheiten bezeichnet, einen wesentlichen Punkt der Montagezeit dar.

Die DE 39 15 897 C1 beschreibt eine an einem Fahrradrahmen befestigbare Hohlschiene, die einen Kanal zur Führung parallel zum Rahmen verlaufender Leitungen usw. aufweist. Die Leitungen werden frei im Kanal geführt. Dieses Dokument offenbart die Merkmale der Präambel von Anspruch 1.

Ähnliche Systeme zur Führung von Kabeln sind durch die EP 1 580 104 A1 und die JP S59 77679 U bekannt. Ein System zur Führung von Kabelzügen an einem Rennradlenker ist durch die WO 2010/139529 A1 bekannt.

Aufgabe der vorliegenden Erfindung ist es, ein Bauteil anzubieten, das eine schnellere Montage eines Fahrrades und insbesondere dessen Ausstattung mit Stellelement-Aktuator-Einheiten erlaubt.

Diese Aufgabe wird durch einen Rahmenrohrschutz gemäß den unabhängigen Ansprüchen gelöst.

Insbesondere wird diese Aufgabe gelöst durch einen Rahmenrohrschutz zum lösbaren Anbringen an ein zu schützendes Rahmenrohr und insbesondere Unterrohr eines Fahrradrahmens , umfassend ein insbesondere einstückiges Abdeckelement, dass derart ausgebildet ist, dass es sich im montierten Zustand des Rahmenrohrschutzes am Fahrradrahmen entlang des zu schützenden Rahmenrohres erstreckt und dabei eine dem Rahmenrohr zugewandte Montageseite und eine dem Rahmenrohr abgewandte Außenseite aufweist, wobei die Montageseite folgendes aufweist: wenigstens ein Klemmmittel zur Fixierung wenigstens eines Kabelzuges, beispielsweise eines Schalt- und/oder Bremszuges, in einem Klemmraum am Abdeckelement, bevor der Rahmenrohrschutz am zu schützenden Rahmenrohr befestigt ist, und wenigstens ein Befestigungsmittel zur lösbaren Befestigung des Rahmenrohrschutzes zusammen mit dem im Klemmraum fixierten Kabelzug am zu schützenden Rahmenrohr, wobei das Befestigungsmittel wenigstens einen Befestigungsfortsatz aufweist, der sich von der Montageseite des Abdeckelementes in Richtung des zu schützenden Rahmenrohres erstreckt und lösbar arretierend in eine Befestigungsfortsatzaufnahme am Rahmenrohr einführbar ist.

Auch gelöst wird die Aufgabe durch ein Fahrrad, mit wenigstens einem Fahrradrahmen, an dem wenigstens ein Aktuator und eine Stellelement vorgesehen sind, die über wenigstens einen Kabelzug miteinander verbunden sind, weiter umfassend wenigstens einen Rahmenrohrschutz wie er hierin beschrieben ist.

Kern der Erfindung ist die Ausbildung des Rahmenrohrschutzes derart, dass er sich insbesondere einstückig entlang des Rahmenrohres erstreckt und zusammen mit daran befestigtem Kabelzug bzw. mehreren Kabelzügen am zu schützenden Rahmenrohr montierbar ist. Auf diese Weise kann an einem Fahrradrahmen eine insbesondere komplett vorkonfektionierte Stellelement-Aktuator-Einheit, also eine Kombination aus Stellelement, Aktuator und insbesondere die beiden Bauteile verbindendem Kabelzug montiert werden. Es ist somit nicht mehr nötig, in einzelnen Arbeitsschritten am Fahrradrahmen, einzeln Stellelemente und Aktuatoren anzuordnen und diese dann über entsprechende Kabelzüge zu verbinden. Indem die vorgefertigte Stellelement-Aktuator-Einheit fertig vorkonfektioniert am Abdeckelement des Rahmenrohrschutzes fixierbar und dann am Fahrradrahmen montierbar ist, reduzieren sich die Montagezeit und die Montagekosten für ein Fahrrad erheblich. Unabhängig davon erlaubt vorzugsweise ein solcher Rahmenrohrschutz die schnelle und insbesondere werkzeuglose Montage und Verlegung von Kabelzügen. Die Fixierung erfolgt vorzugsweise derart, dass der Kabelzug während des Montagevorganges und insbesondere beim Verschwenken des Abdeckelementes um wenigstens 90° sicher am Abdeckelement gehalten ist.

Die Option, dass das Abdeckelement insbesondere einstückig am Rahmenrohr verläuft, garantiert dabei eine sichere Fixierung des Kabelzuges bei gleichzeitig leichter Montierbarkeit am Rahmenrohr. Es hat sich herausgestellt, dass insbesondere eine Einstückigkeit die für die Montage nötige Steifigkeit und Vorpositionierung der Kabelzüge garantiert. Auf diese Weise kann ein Kabelzug, insbesondere mit daran vormontierten Stellelementen und Aktuatoren, schnell und sicher am Rahmenrohr befestigt werden, wobei die Montage gleichzeitig mit der Montage des Rahmenrohrschutzes möglich ist. Gerade bei der Montage von mehreren Kabelzügen ist dies von besonderer Bedeutung.

Es ist auch möglich, das Abdeckelement modular und insbesondere aus mehreren Abdeckelementteilen auszubilden, die zu dem Abdeckelement zusammengefügt werden können. Die einzelnen Abdeckelementteile können, sowohl in Quer- als auch in Längsrichtung des zu schützenden Rohres, unterschiedliche Formen, insbesondere Bogenformen oder Geraden, und unterschiedliche Längen umfassen, um das Abdeckelement an unterschiedliche Rohrgeometrien, sowohl in Quer- als auch in Längsrichtung des zu schützenden Rohres anzupassen. Es ist denkbar, wenigstens zwei Abdeckelementteile mit Verbindungsmitteln und komplementären Verbindungsgegenmitteln auszuführen, die ein Verbinden der Abdeckelementteile miteinander möglich machen, insbesondere bevor das Abdeckelement am zu schützenden Rohr montiert wird. Auf diese Weise können einzelne Abdeckelementteile zum Abdeckelement komplettiert, dann mit den Kabelzügen bzw. Baugruppen bestückt und als Gesamtheit am Fahrradrahmen befestigt werden. Als Verbindungsmitteln und komplementären Verbindungsgegenmitteln können Steckmittel, Laschenmittel, Überlappungen, Nut und Federsysteme oder dergleichen aus dem Stand der Technik bekannte Systeme zum Verbinden, und optional Steckverbinden und weiter optional werkzeuglosem Verbinden von wenigstens zwei Bauteilen zu einem Gesamtbauteil verwendet werden.

Wahlweise ist insbesondere in diesem Zusammenhang das Abdeckelement derart ausgebildet, dass es eine ausreichende Formsteifigkeit aufweist, so dass es mit montiertem Kabelzug, ohne übermäßige Formveränderung und insbesondere Verbiegung montierbar ist. Das Abdeckelement muss derart ausreichend formsteif sein, dass es eine Vorausrichtung bzw. Vorpositionierung des wenigstens einen montierten Kabelzuges sicherstellt ist, bevor es am Rahmenrohr montiert ist. Wahlweise ist das Abdeckelement derart ausreichend formsteif ausgebildet, dass verhindert wird, dass es mit montiertem Kabelzug um eine Achse senkrecht zu seiner Haupterstreckungsachse unzulässig verbiegbar ist. Unzulässig verbiegbar bedeutet hier insbesondere, dass das Abdeckelement, wenn man es im Zuge eines Formsteifigkeitstests an einem Ende einspannt, aufgrund seines Eigengewichts inklusive montiertem Kabelzug um mehr als ein Drittel seiner Länge, optional ein Fünftel seiner Länge und weiter optional ein Achtel seiner Länge, gemessen am freien Ende, nach unten gebogen wird.

Wahlweise ist das Abdeckelement aus einem derartigen Material hergestellt, dass es einen Steinschlagschutz und Kratzschutz für das zu schützende Rahmenrohr bietet. Das Abdeckelement ist wahlweise aus einem Material, das im Wesentlichen biegesteif ausgebildet ist und/oder elastisch ausgebildet ist. Das Material ist vorzugsweise ein Kunststoff, wahlweise ein Strangpressbarer Kunststoff und insbesondere ein thermoplastischer Kunststoff.

Das Klemmmittel zum Fixieren des wenigstens einen Kabelzuges ist optional als ein Schnappklemmmittel ausgebildet, sodass der wenigstens eine Kabelzug schnappfixierend im Klemmraum aufgenommen werden kann. Schnappfixieren bedeutet hier insbesondere, dass ein Schnapppunkt mittels Druck überwunden werden muss, um den Kabelzug im Klemmraum zu fixieren. Nach Überwinden dieses Schnapppunktes ist optional der Kabelzug stabil und insbesondere auch spielfrei im Klemmraum fixiert. Der Schnapppunkt verhindert insbesondere das Herausfallen des Kabelzuges, wenn Belastungen, wie Eigengewicht, Beschleunigungen insbesondere beim Betrieb des Fahrrads wirkende Kräfte, z.B. Vibrationen etc. auf den Kabelzug wirken. Optional ist die Schnappfixierung derart ausgebildet, dass der Kabelzug aus dem Klemmraum unter Überwindung des Schnapppunktes entfernt werden kann, beispielsweise wenn der Kabelzug ausgetauscht oder das Abdeckelement ausgetauscht werden soll. Hier gilt obiges aus diesem Absatz entsprechend.

Das Klemmmittel ist optional derart ausgebildet, dass eine werkzeuglose Fixierung, und insbesondere Einführung, des Kabelzuges in den Klemmraum möglich ist.

Der Rahmenrohrschutz ist optional derart ausgebildet, dass das Klemmmittel wenigstens einen Klemmfortsatz zum Festklemmen wenigstens eines Kabelzuges im Klemmraum aufweist. Optional wird der Klemmraum zwischen wenigstens zwei korrespondierenden Klemmfortsätzen gebildet. Es ist auch denkbar, dass der Klemmraum zwischen wenigstens einem Klemmfortsatz und der Montageseite des Abdeckelementes gebildet wird. Auch ist es denkbar, dass der Klemmfortsatz insbesondere derart gebogen ausgebildet ist, das er für sich alleine den Klemmraum bildet.

Der Klemmraum verfügt vorzugsweise über eine Einsetzöffnung zum Einführen des Kabelzuges. Das Klemmmittel ist vorzugsweise derart elastisch ausgebildet, dass diese Einführöffnung elastisch vergrößert werden kann, um den Kabelzug in den Klemmraum einzuführen und/oder verkleinert werden kann, um den Kabelzug im Klemmraum zu halten. Diese Elastizität kann beispielswiese über wenigstens einen elastisch ausgebildeten oder gelagerten Klemmfortsatz erzielt werden.

Optional ist das Klemmmittel derart ausgebildet, dass wenigstens ein Kabelzug entlang einer orthogonal zu seiner Haupterstreckungsrichtung AHK verlaufenden Einführrichtung R in den Klemmraum einführbar und dort gehalten ist.

Der Rahmenrohrschutz ist optional derart ausgebildet, dass das Klemmmittel mittels wenigstens eines Klemmfortsatzes den Klemmraum bildet, wobei sich eine Haupterstreckungsrichtung des Klemmraumes entlang einer Haupterstreckungsrichtung des Abdeckelementes erstreckt. Die Haupterstreckungsrichtung ist im Umfang der Erfindung die Richtung entlang der längeren Erstreckung des jeweiligen Elementes. Insbesondere ein Kabelzug kann in einem derart ausgebildeten Klemmraum sicher geführt werden.

Das Klemmmittel ist optional mittels einer Klemmmittelbefestigung am Abdeckelement insbesondere lösbar befestigbar. Das Klemmbefestigungsmittel kann derart ausgebildet sein, dass eine Fixierung des Klemmmittels relativ zum Abdeckelement und insbesondere orthogonal zur Montageseite sichergestellt ist. Das Klemmbefestigungsmittel kann derart ausgebildet sein, dass das Klemmmittel wenigstens abschnittsweise längsverschieblich entlang des Abdeckelementes und insbesondere entlang seiner Haupterstreckungsachse ist.

Die Klemmmittelbefestigung weist optional wenigstens einen Befestigungsfortsatz am Abdeckelement und wenigstens eine dazu komplementäre Fortsatzaufnahme am Klemmmittel aufweist, und/oder umgekehrt. Der Befestigungsfortsatz ist optional eine Klemmmittelschiene, insbesondere am Abdeckelement, die sich insbesondere abschnittsweise entlang der Haupterstreckungsachse des Abdeckelementes erstreckt. Die Fortsatzaufnahme ist optional eine zur Klemmmittelschiene komplementär ausgebildete und darauf fixierend befestigbare Schienenaufnahme am Klemmmittel.

Es ist denkbar das Klemmmittel derart auszubilden, dass die Fortsatzaufnahme, bzw. die Schienenaufnahme längsverschieblich in der Klemmmittelschiene geführt ist. Es ist denkbar, das Klemmmittel derart auszubilden, dass eine Fixierung in dieser Längsrichtung durch eine insbesondere orthogonal dazu wirkende Fixierkraft erreicht wird. Dies kann durch eine, insbesondere im Folgenden noch beschrieben Vorspannung des Klemmmittels gegen das Abdeckelement und insbesondere mittels eines Federvorsprunges oder dergleichen wirkenden Federelementes erreicht werden. Zur Fixierung kann der Befestigungsfortsatz bzw. die Klemmmittelschiene eine Hinterschneidungsfläche und die Fortsatzaufnahme, bzw. die Schienenaufnahme eine dazu komplementär daran anstehende Gegenhinterscheidungsfläche aufweisen. Eine Fixierung erfolgt hier optional über Aktivieren einer Haftreibung zwischen Befestigungsfortsatz und Fortsatzaufnahme.

Der Befestigungsfortsatz kann als Vorsprung und/oder Aufnahme und die Fortsatzaufnahme komplementär dazu als Aufnahme bzw. Vorsprung ausgeführt sein. Befestigungsfortsatz bzw. die Klemmmittelschiene erstreckt sich vorzugsweise über 5% - 30%, optional über 5% - 20% der Längsrichtung des Abdeckelementes. Optional sind eine Mehrzahl an solchen Befestigungsfortsatz bzw. Fortsatzaufnahmen, insbesondere hintereinander, insbesondere von einander beabstandet, am Abdeckelement ausgebildet.

Optional ist das Klemmmittel insbesondere entlang der Haupterstreckungsachse des Abdeckelementes abschnittsweise an unterschiedlichen Positionen am Abdeckelement positionierbar. Weiter optional ist das Klemmmittel insbesondere entlang der Haupterstreckungsachse längsverschieblich ausgebildet. Das Klemmmittel und/oder das Abdeckelement kann wenigstens ein Rastmittel aufweisen, zum Festlegen des Klemmmittels an unterschiedlichen Rastpunktpositionen am Abdeckelement.

Optional ist das Klemmmittel werkzeuglos über die Klemmmittelbefestigung am Abdeckelement befestigbar. Vorzugsweise ist die Klemmmittelbefestigung eine Schnappbefestigung. Hier gilt vergleich das zur obigen Schnappbefestigung gesagtes.

Optional ist die Klemmmittelbefestigung derart ausgebildet, dass das Klemmmittel durch eine Längsverschiebung, ebenenparallel zur Montageseite und unter Ineingriffbringen mit einem am Abdeckelement ausgebildeten Teil der Klemmmittelbefestigung am Abdeckelement befestigt werden kann.

Optional weist das Klemmmittel wenigstens einen Federvorsprung oder dergleichen wirkendes Federelement auf, der das Klemmmittel gegen eine zwischen Klemmmittelbefestigung und Abdeckelement wirkende Haltekraft vorspannt. Auf diese Weise kann eine spielfreie Lagerung des Klemmmittels am Abdeckelement erreicht werden. Auch ist es denkbar auf diese Weise eine Fixierung der Klemmmittelbefestigungsteile relativ zueinander zu erreichen und so das Klemmmittel am Abdeckelement ortsfest zu positionieren. Der Federvorsprung kann derart ausgebildet sein, das er gegen das Abdeckelement, insbesondere gegen die Montageseite des Abdeckelementes ansteht und eine elastische Bewegung des Klemmmittels in Richtung des Abdeckelementes, insbesondere gegen dessen Montageseite, unter Einwirken einer in Richtung auf Abdeckelement bzw. dessen Montageseite wirkenden Druckkraft erlaubt. Elastisch bedeutet optional, dass er das Klemmmittel in entgegengesetzte Richtung wegdrängt.

Optional weist das Abdeckelement wenigstens einen Abdeckelement-Federvorsprung oder dergleichen wirkendes Abdeckelement-Federelement auf, der das Abdeckelement im am Rahmenrohr montierten Zustand vom Rahmenrohr wegdrängt und insbesondere derart wegdrängt, dass eine Haltekraft im Befestigungsmittel zwischen Rahmenrohr und Abdeckelement aktiviert wird. Auch ist es denkbar, dass der Abdeckelement-Federvorsprung oder dergleichen wirkendes Abdeckelement-Federelement derart ausgebildet ist, dass das Abdeckelement im am Rahmenrohr montierten Zustand vom Rahmenrohr wegdrängt wird und zwar derart, dass das Klemmmittel gegen eine zwischen Klemmmittelbefestigung und Abdeckelement wirkende Haltekraft vorspannt wird. Auf diese Weise kann, wie schon im Absatz zuvor beschrieben, eine spielfreie Lagerung des Klemmmittels am Abdeckelement erreicht werden. Auch ist es denkbar auf diese Weise eine Fixierung der Klemmmittelbefestigungsteile relativ zueinander zu erreichen und so das Klemmmittel am Abdeckelement ortsfest zu positionieren.

Optional ist der wenigstens eine Klemmfortsatz am Federelement ausgebildet ist. Auch ist es denkbar, dass der Federvorsprung derart vorgespannt wird, dass er den wenigstens einen Klemmfortsatz so vorspannt, dass die Einsatzöffnung des Klemmraumes verkleinert wird. Eine Vergrößerung der Einsetzöffnung aktiviert im Gegenzug die auf den Federvorsprung wirkende Vorspannung. Es ist denkbar, das Klemmmittel derart auszubilden, dass der wenigstens eine Kabelzug in den Kabelraum eingesetzt werden kann, wenn das Klemmmittel nicht am Abdeckelement montiert ist, wobei ein endgültige Fixierung des Kabelzuges im Klemmraum bei der Montage des Klemmmittels am Abdeckelement erfolgt.

Optional ist der Klemmraum so ausgebildet, dass zwei oder mehr Kabelzüge nebeneinander in Bezug auf die Montageseite im Klemmraum fixiert werden können. Grundsätzlich gilt für eine Ausführungsform, in der zwei oder mehr Kabelzüge fixiert werden können, alles das, was für eine Ausführungsform mit nur einem Kabelzug hier offengelegt ist. Das bedeutet also beispielsweise, dass bei einem Klemmraum, in dem zwei Kabelzüge fixiert werden können, optional das Klemmmittel so ausgebildet ist, dass zwei oder mehr Schnapppunkte zur Verfügung gestellt sind, eben für jeden Kabelzug wenigstens einer. Im Umfang der Erfindung bedeutet "ein Kabelzug" immer "wenigstens ein Kabelzug", außer es ist anderweitig erwähnt.

Insbesondere wenn der Klemmraum zwischen Klemmfortsatz und Montageseite ausgebildet ist, ist optional das Klemmmittel derart ausgebildet, dass wenigstens ein Kabelzug entlang einer zur Montageseite ebenen-parallel verlaufenden Einführrichtung R_{EP} und/oder zur Haupterstreckungsrichtung A_{HA} des Abdeckelementes orthogonal verlaufenden Einführrichtung R_{ORT} in den Klemmraum einführbar und dort fixierbar ist. Wenigstens eine dieser genannten Einführrichtungen R_{EP} bzw. R_{ORT} sind optional auch orthogonal zur Haupterstreckungsrichtung des am Abdeckelement zu führenden Kabelzuges ausgerichtet. Optional kann der Kabelzug in einer Richtung orthogonal zu seiner Haupterstreckungsachse in den Klemmraum eingeführt werden. Auf diese Weise kann, wie eingangs bereits erläutert, eine fertig vorkonfektionierte Stellelement-Aktuator-Einheit im Klemmraum fixiert und zusammen mit dem Abdeckelement bzw. Rahmenrohrschutz am Rahmenrohr montiert werden.

Optional weist der Klemmfortsatz wenigsten einen insbesondere orthogonal zur Einführrichtung R elastisch bewegbaren Teilbereich und insbesondere freien Endbereich auf. Auf diese Weise kann der Klemmraum elastisch erweitert und der Kabelzug einfach eingeführt und im Klemmraum insbesondere vorgespannt und/oder festgeklemmt gehalten werden.

Optional ist der Klemmfortsatz so ausgebildet, dass er sich parallel zur Montageseite des Abdeckelementes und von dieser beabstandet erstreckt. Unter parallel wird hier im Wesentlichen parallel verstanden; Abweichungen um einen Winkel von ± 15°, optional ± 10° sind umfasst. Bei der Ausführungsform des Abdeckelementes mit einer nicht vollständig ebenen Flächenausdehnung, beispielsweise mit einer gekrümmten und/oder gewölbten Flächenausdehnung und insbesondere im Bereich des Klemmraumes mit einer nicht vollständig ebenen Fläche, bezieht sich obige Parallelität optional auf den Bereich im Bereich des Klemmraumes, und insbesondere auf eine Tangente zur Montageseite im Bereich des Klemmraumes insbesondere senkrecht zur Haupterstreckungsachse. Kerngedanke ist, dass sich der Klemmraum und insbesondere ein Einführbereich zum Einführen des Kabelzuges in den Klemmraum so erstrecken, dass bei einem vor vollständiger Montage am Rahmenrohr positioniertem Abdeckelement ein seitlicher Spalt entsteht, der eine Sichtkontrolle der Lage des Kabelzuges im Klemmraum erlaubt. Anschließend kann das Abdeckelement vollständig am Rahmenrohr angeordnet werden, wobei der beschriebene Spalt im Wesentlichen verschwindet bzw. minimiert wird, sodass ein Herausfallen des Kabelzuges nicht nur durch die Klemmwirkung des Klemmmittels, sondern auch durch die Geometrie und die Lage des Abdeckelementes am Unterrohr verhindert wird.

Optional ist das Abdeckelement bei montiertem Rahmenrohrschutz am Rahmenrohr im Wesentlichen ebenparallel zu dem Rahmenrohrbereich, den es zu schützen gilt, ausgebildet. Die Form des Abdeckelementes und insbesondere die Form der Montageseite sind optional komplementär zur Form des zu schützenden Rahmenrohres ausgebildet. Optional weist das Rahmenrohr einen Aufnahmeraum auf, in dem das Klemmmittel aufgenommen ist, wenn der Rahmenrohrschutz am Rahmenrohr befestigt ist. Ein solcher Aufnahmeraum kann beispielsweise eine entlang des Rahmenrohres verlaufende Nut oder dergleichen Ausnahme sein.

Optional ist, wie zuvor schon beschrieben wenigstens ein Teil des Klemmfortsatzes elastisch ausgebildet und insbesondere entlang einer zu Montageseite orthogonalen Klemmachse A_{K} und/oder entlang einer zur Haupterstreckungsachse des Abdeckelementes orthogonalen Achse elastisch ausgebildet. Auf diese Weise kann ein zuverlässiges, wahlweise spielfreies Fixieren des wenigstens einen Kabelzuges im Klemmraum garantiert werden. Die Elastizität erlaubt darüber hinaus die Ausbildung eines Schnappverschlusses und das sichere und einfache Einführen des Kabelzuges in den Klemmraum. Optional ist das Klemmmittel derart ausgebildet, dass der Kabelzug spielfrei im Klemmraum gehalten ist. Spielfrei beutet optional, dass der Kabelzug beim normalen Betrieb des Fahrrades wenigstens im Bereich des Klemmraumes nicht gegen das Abdeckelement klappert.

Die Elastizität ist dabei wahlweise derart gewählt, dass ein Einführen und/oder Entnehmen des Kabelzuges aus dem Klemmraum nur unter Aufbringen externer Einführ- bzw. Entnahmekräfte und nicht, wie bereits auch schon beschrieben, durch Kräfte, die durch den Betrieb des Fahrrades entstehen, möglich ist.

Optional weist der Klemmraum und insbesondere der wenigstens eine Klemmfortsatz und/oder die Montageseite wenigstens einen zur Außengeometrie des Kabelzuges wenigstens abschnittsweise komplementär ausgebildeten Kabelzugführungskanal auf. Das bedeutet, dass eine entsprechende Geometrie in wenigstens einem dieser Bereiche vorgesehen ist, die komplementär zum Kabelzug ausgebildet ist und eine sichere Lagerung des Kabelzuges im Klemmraum garantiert. Eine solche Geometrie und insbesondere ein solcher Kabelzugführungskanal können beispielsweise auch die zuvor erwähnte Schnappfunktion realisieren und insbesondere einen der zuvor erwähnten Schnapppunkte zur Verfügung stellen. Beispielsweise kann dieser Schnapppunkt durch einen Randbereich des Kabelführungskanals gebildet werden, den es durch Einführen und/oder Herausdrücken des Kabelzuges in den Kabelzugführungskanal bzw. aus diesem heraus zu überwinden gilt. Optional sind mehrere solcher Kabelzugführungskanäle insbesondere parallel zueinander im Klemmraum ausgebildet. Optional ist der Kabelzugführungskanal derart ausgebildet, dass er eine Mehrzahl unterschiedlicher Kabelzuggeometrien aufnehmen kann. Der Kabelzugführungskanal kann optional eine rinnenartige Querschnittsform aufweisen.

Optional sind an der Montageseite des Abdeckelementes wenigstens zwei Klemmräume vorgesehen, die relativ zur Haupterstreckungsachse A_{HA} des Abdeckelementes jeweils links- und rechtsseitig angeordnet sind und insbesondere wenigstens abschnittsweise zur Haupterstreckungsachse A_{HA} des Abdeckelementes spiegelsymmetrisch angeordnet sind. Auf diese Weise kann das Abdeckelement gleichmäßig links- und rechtsseitig mit Kabelzügen ausgestattet werden. Die jeweiligen Einführbereiche für den Klemmraum des jeweiligen Klemmmittels sind dabei vorzugsweise ebenfalls zueinander gegenüberliegend, links- und rechtsseitig und/oder spiegelsymmetrisch angeordnet. Es ist auch denkbar die Erfordernisse aus dem vorhergehenden Absatz für eine Mehrzahl an Klemmmitteln anzuwenden, dass also wenigstens zwei Klemmmittel vorgesehen sind, die relativ zur Haupterstreckungsachse A_{HA} des Abdeckelementes jeweils links- und rechtsseitig angeordnet sind und insbesondere wenigstens abschnittsweise zur Haupterstreckungsachse A_{HA} des Abdeckelementes spiegelsymmetrisch angeordnet sind, usw.

Das Klemmmittel kann, wie bereits erwähnt, wenigstens einen Klemmfortsatz aufweisen. Der Klemmfortsatz kann optional so ausgebildet sein, dass er sich entlang der gesamten Haupterstreckungsachse des Abdeckelementes, optional über maximal 80% des Abdeckelementes erstreckt. Optional kann ein Klemmmittel über mehrere Klemmfortsätze verfügen, die zueinander beabstandet und insbesondere entlang der Haupterstreckungsrichtung voneinander beabstandet sind. Es ist auch denkbar, eine Mehrzahl an Klemmmitteln nebeneinander oder hintereinander (bezüglich der Haupterstreckungsachse A_{HA} am Abdeckelement vorzusehen. Auch ist es denkbar, das Klemmmittel so auszubilden, dass Kabelzüge (bezüglich der Montageseite) nebeneinander und/oder übereinander im Klemmraum fixiert werden können.

Optional sind entlang der Haupterstreckungsachse A_{HA} des Abdeckelementes eine Mehrzahl an voneinander beanstandeter Klemmräume ausgebildet oder angeordnet. Es ist denkbar die Klemmfortsätze so auszubilden, dass maximal 20 %, optional maximal 10 % und weiter optional maximal 5 % seiner Erstreckungslänge entlang des Abdeckelementes im Klemmraum festgeklemmt ist. Optional ist also ein Kabelzug im Klemmraum nur an speziellen definierten Stellen festgeklemmt, während andere Stellen ohne Klemmung auskommen.

Erfindungsgemäß weist das Befestigungsmittel zum Festlegen des Rahmenrohrschutzes am Rahmenrohr wenigstens einen Befestigungsfortsatz auf, der sich insbesondere orthogonal von der Montageseite des Abdeckelementes in Richtung des zu schützenden Rahmenrohres erstreckt und lösbar arretierend in eine Befestigungsfortsatzaufnahme am Rahmenrohr einführbar ist. Optional ist das Befestigungsmittel so ausgebildet, dass es von der Außenseite des Abdeckelementes nicht sichtbar ist. Optional durchgreift das Befestigungsmittel die Außenseite des Abdeckelementes nicht.

Optional weist das Befestigungsmittel ein Schnappmittel zur werkzeuglosen Befestigung des Abdeckelementes am Rahmenrohr auf, insbesondere wobei der zuvor genannte Befestigungsfortsatz einen Kugel- oder dergleichen Volumenkopf aufweist, der in eine komplementär dazu ausgebildete Befestigungsfortsatzaufnahme am Rahmenrohr werkzeuglos einschnappbar und ausschnappbar ist. Eine solche Schnappbefestigung erlaubt die einfache und sehr schnelle Befestigung des Rahmenrohrschutzes am Rahmenrohr. Das Befestigungsmittel ist optional derart ausgebildet, dass die Widerstandskraft gegen das Lösen der Befestigung des Rahmenrohrschutzes am Rahmenrohr, größer ist, als die Kräfte, die beim Betrieb des Fahrrades auf die Befestigungsmittel wirken.

Optional ist der Befestigungsfortsatz des Befestigungsmittels an unterschiedlichen Montagepositionen, insbesondere an unterschiedlichen Positionen entlang der Haupterstreckungsachse A_{HA}, am Abdeckelement befestigbar. Auf diese Weise kann der Rahmenrohrschutz an unterschiedlichen Rahmenrohren bzw. unterschiedlichen Fahrradrahmen montiert werden, ohne dass eine genaue Vorkonfektionierung der Positionen der Befestigungsfortsatzaufnahmen nötig ist.

Optional weist das Abdeckelement Positions-Visualisierungsmittel und insbesondere wenigstens eine Skala zur Visualisierung und/oder Festlegung unterschiedlicher vordefinierte potentieller Montagepositionen für das Klemmmittel und/oder das Befestigungsmittel auf. Diese Positions-Visualisierungsmittel sind vorzugsweise auf der Montageseite angeordnet. Diese Positions-Visualisierungsmittel sind optional, insbesondere in Form einer Rastung, an der Klemmmittelbefestigung und insbesondere an der Klemmmittelschiene angeordnet. Es ist denkbar, dass die Positions-Visualisierungsmittel Rast- oder dergleichen Mittel aufweisen, die eine haptische Visualisierung unterschiedlicher Montagepositionen ermöglichen. So kann beispielsweise das Positions-Visualisierungsmittel Rastfortsätze an der Klemmmittelschiene aufweisen, die mit Rastgegenfortsätzen an der Schienenaufnahme zusammenarbeiten und so im Rastzustand wenigstens eine, vorzugsweise eine Mehrzahl and Montageposition definieren bzw. dem Benutzer kenntlich machen. Es ist auch denkbar eine Skala zu verwenden die dem Benutzer unterschiedliche Montagepositionen visualisiert. Die unterschiedlichen Montagepositionen können beispielsweise in Abhängigkeit unterschiedlicher Fahrradrahmen, Modelle, Rahmengrößen, geforderter Befestigungskräfte etc. gewählt werden. So kann Positions-Visualisierungsmittel beispielsweise kenntlich machen welche Montageposition am Abdeckelement zur Montage des Abdeckelementes an einem S, M bzw. L Rahmen gewählt werden muss. An dieser Montageposition ist dann das Befestigungsmittel und/oder Klemmmittel vorzugsweise festzulegen bzw. zu Positionieren.

Optional weist das Befestigungsmittel eine Montagenut zur Aufnahme wenigstens eines Nutensteins auf, über den der Befestigungsfortsatz am Abdeckelement festlegbar ist. Solche Nutensteinkonstruktionen sind aus dem Stand der Technik bekannt. Hier erlauben sie das Verfahren des Befestigungsfortsatzes entlang der Montagenut innerhalb wenigstens eines bestimmten Bereiches und so die Adaption des Rahmenrohrschutzes an unterschiedliche Positionen der Befestigungsfortsatzaufnahme am Rahmenrohr. Optional ist der Befestigungsfortsatz in den Nutenstein unter Festklemmung des Nutensteins in der Montagenut lösbar einschraubbar oder dergleichen fixierbar.

Optional ist wenigstens eine Teil des Befestigungsmittels am Klemmmittel angeordnet, insbesondere integral mit dem Klemmmittel ausgebildet. So kann beispielsweise Der Befestigungsfortsatz integral am Klemmmittel ausgebildet sein. Auf diese Weise kann der Befestigungsfortsatz zusammen mit dem Klemmmittel hergestellt und am Abdeckelement montierbar ausgebildet sein.

Optional ist bei einer weiteren Ausführungsform das Klemmmittel integral am Abdeckmittel ausgebildet. Das Klemmmittel ist optional aus demselben Material hergestellt wie das Abdeckelement. Eine solche Ausführungsform kann beispielsweise durch ein Strangprofil hergestellt sein, bei dem das Klemmmittel zusammen mit dem Abdeckelement hergestellt wird.

Weiter optional sind bei einer weiteren Ausführungsform das Klemmmittel und insbesondere ein Klemmfortsatz integral mit wenigstens einem Element des Befestigungsmittels ausgebildet. Beispielsweise kann ein Klemmfortsatz an einer Montagenut zur Aufnahme wenigstens eines Nutensteins ausgebildet sein, über den der Befestigungsfortsatz eines Befestigungsmittels am Abdeckelement festlegbar ist. Diese Montagenut kann die zuvor beschriebene Montagenut sein. Auch insbesondere in diesem Zusammenhang kann optional das Abdeckelement als ein Strangpressprofil hergestellt sein, sodass insbesondere Klemmmittel und Befestigungsmittel zusammen mit dem Abdeckelement hergestellt werden können.

Grundsätzlich ist es denkbar, dass das Abdeckelement als ein Strangpressprofil hergestellt ist. Es ist möglich, das Abdeckelement als Laufmeterware zur Verfügung zu stellen. Eine Laufmeterware kann durch geeignete Ablängung und/oder Formgebung, insbesondere an den freien Stirnseitenenden des Abdeckelementes, an die Länge des zu schützenden Rahmenrohres angepasst werden. Auf diese Weise ist eine sehr kostengünstige Produktion des Rahmenrohrschutzes möglich.

Auch ist es denkbar, den Befestigungsfortsatz des Befestigungsmittels integral am Abdeckelement vorzusehen. Hier kann dann beispielsweise das Befestigungsmittel keine Montagenut, sondern nur an speziellen definierten Positionen ausgeführte Befestigungsfortsätze aufweisen, die dann in Befestigungsfortsatzaufnahmen am Rahmenrohr fixierend einführbar sind. Hier sind sämtliche, aus dem Stand der Technik bekannte, insbesondere lösbare Fixiermethoden anwendbar.

Weitere Aufführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Darstellung einer Ausführungsform eines Rahmenrohrschutzes, montiert an einem Fahrradrahmen;
- Fig. 2: einen Längsschnitt der Ausführungsform gemäß Fig. 1;
- Fig. 3: eine Seitenansicht eines Abdeckelementes des Rahmenrohrschutzes gemäß Fig. 1;
- Fig. 4: eine Draufsicht auf die Montageseite des Abdeckelementes des Rahmenrohrschutzes gemäß Fig. 1;
- Fig. 5: eine isometrische Darstellung des Abdeckelementes des Rahmenrohrschutzes gemäß Fig. 1;
- Fig. 6: einen Querschnitt durch das Abdeckelement entsprechend der Schnittführung aus Fig. 4;
- Fig. 7: einen Detailschnitt durch einen Montagebereich des Rahmenrohrschutzes am Fahrradrahmen gemäß einem Ausschnitt aus Fig. 2;
- Fig. 8: einen Querschnitt durch eine weitere Ausführungsform des Rahmenrohrschutzes gemäß der Schnittführung aus Fig. 4;
- Fig. 9: einen Längsschnitt durch einen Fahrradrahmen eines weiteren Fahrrades mit einer weiteren Ausführungsform des Rahmenrohrschutzes;
- Fig. 10: einen Querschnitt durch die Ausführungsform gemäß Fig. 9 in der dort gezeigten Schnittführung;
- Fig. 11: eine Detailansicht des in Fig. 9 gekennzeichneten Ausschnittes;
- Fig. 12: einen Querschnitt durch das Abdeckelement des Rahmenrohrschutzes gemäß Fig. 9 entsprechend der Schnittführung aus Fig. 14;
- Fig. 13: eine isometrische Darstellung des Abdeckelementes des Rahmenrohrschutzes gemäß Fig. 9;
- Fig. 14: eine Seitenansicht des Abdeckelementes des Rahmenrohrschutzes gemäß Fig. 9; und
- Fig. 15: eine Draufsicht auf die Montageseite des Abdeckelementes des Rahmenrohrschutzes gemäß Fig. 9.

Im Folgenden werden für gleiche und gleich wirkende Bauteile dieselben Bezugsziffern verwendet, wobei zur Unterscheidung gleichwertiger Bauteile Hochindizes ihre Anwendung finden können.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen eingeschränkt ist. Vielmehr sind diese Ausführungsformen hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

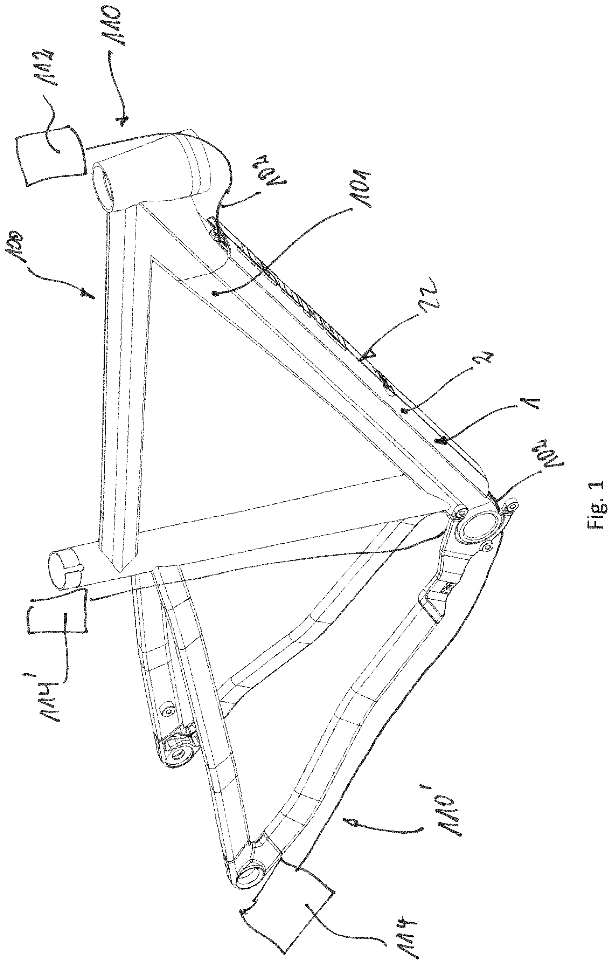

Die Figs. 1 bis 7 zeigen eine Ausführungsform eines Fahrradrahmens 100 einer Ausführungsform des erfindungsgemäßen Fahrrades, an dem wenigstens ein Aktuator 114 und eine Stellelement 112 vorgesehen sind, die über wenigstens einen Kabelzug 102 miteinander verbunden sind. An diesem Fahrradrahmen ist wenigstens ein Rahmenrohrschutz 1 befestigt. Der Rahmenrohrschutz 1 ist im Detail an einem Rahmenrohr 101 des Fahrradrahmens 100 montiert; er dient hier dem Schutz des Rahmenrohres 101, insbesondere gegen Steinschlag oder Transportschäden. Darüber hinaus erlaubt er die schnelle Montage von Kabelzügen 102, die entlang des Unterrohres 101 geführt werden und insbesondere Teil einer Stellelement-Aktuator-Einheit 110 sind.

Eine solche Stellelement-Aktuator-Einheit kann beispielsweise eine Zusammenstellung eines Schalthebels, eines Kabelzuges und eines Schaltwerkes oder jede andere in einem Fahrrad entsprechend ausgebildete und bekannte Einheit sein. Exemplarisch ist die Stellelement-Aktuator-Einheit 110 hier durch das Stellelement 112, den Kabelzug 102 und den Aktuator 114 dargestellt. Ein solches Stellelement 112 kann beispielsweise ein Schalthebel, ein Bremshebel, ein Sattelverstellhebel, ein Federungseinstellhebel, eine Tachoanzeige, eine Ganganzeige, ein Motoraktivator etc. sein. Ein Aktuator kann beispielsweise ein Schaltwerk, ein Umwerfer, eine hydraulische Sattelstütze, ein adaptierbarer Dämpfer, ein Tachosensor, ein Motor etc. sein. Optional umfasst eine Stellelement-Aktuator-Einheit 110 ein Anordnung von zwei Elementen, insbesondere Stellelementen und/oder Aktuatoren, die über einen Kabelzug wie er hierin definiert ist verbunden sind, wobei der Kabelzug insbesondere Abschnittsweise am Rahmenrohr geführt werden soll.

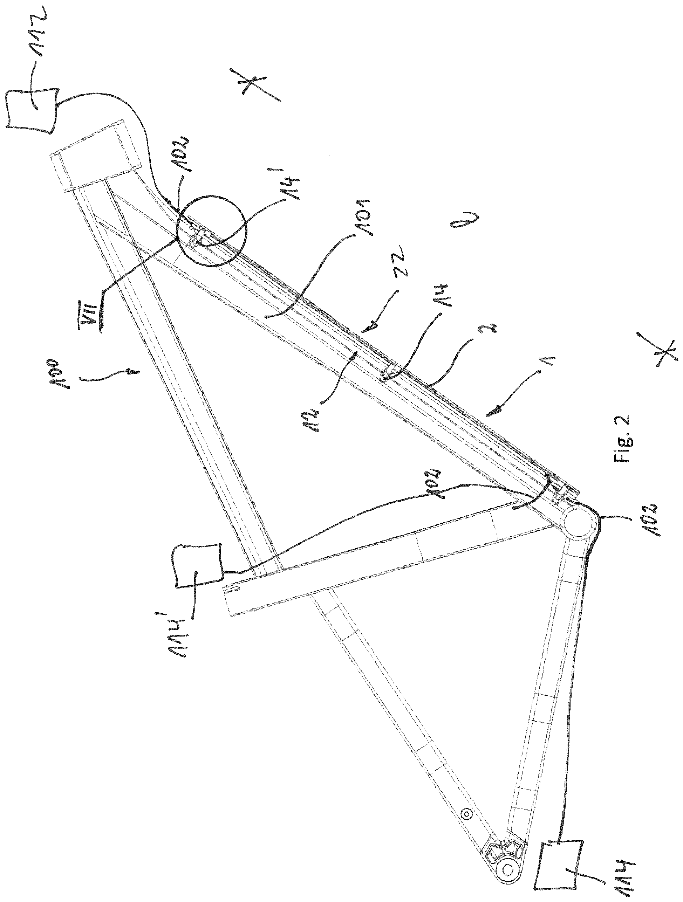

Die hier gezeigte Ausführungsform des Rahmenrohrschutzes 1 ist lösbar an dem zu schützenden Rahmenrohr 101, das hier insbesondere als Unterrohr des Fahrradrahmens 100 dargestellt ist, anordbar. Es umfasst ein insbesondere einstückiges Abdeckelement 2, das derart ausgebildet ist, dass es sich in dem beispielsweise in den Figs. 1 und 2 dargestellten montierten Zustand am Fahrradrahmen 100 entlang des gesamten zu schützenden Rahmenrohres 1, und hier insbesondere über die Länge 1 erstreckt. Das Abdeckelement 2 weist dabei eine dem Rahmenrohr 101 abgewandte Außenseite 22 und eine dem Rahmenrohr 101 zugewandte Montageseite 12 auf.

Die Außenseite dient insbesondere als Schutzseite gegen Beschädigungen des Rahmenrohres 101. Sie ist aus einem widerstandsfähigen Material hergestellt. Optional ist das gesamte Abdeckelement aus einem entsprechend widerstandsfähigen Material hergestellt, um Beschädigungen durch Steinschlag, Transport oder sonstige mechanische Beanspruchungen am Abdeckelement vom Rahmenrohr abzuhalten.

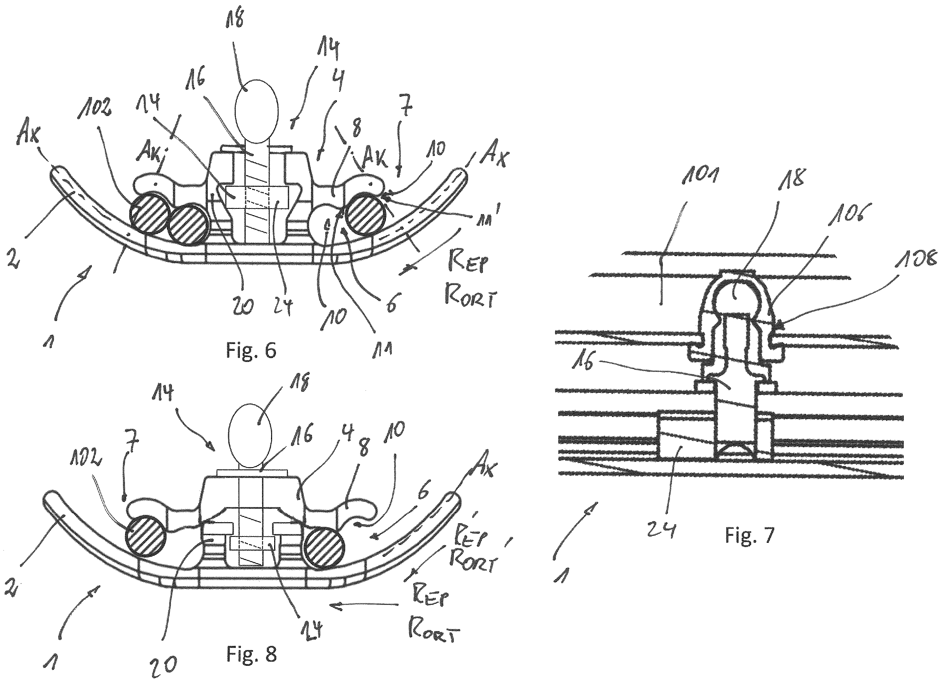

Wie insbesondere in den Figs. 2 und 7 dargestellt, weist die Montageseite 12 ein Befestigungsmittel 14 auf, dass der lösbaren Befestigung des Rahmenrohrschutzes am Rahmenrohr dient. Das Befestigungsmittel 14 ist hier beispielsweise als Schnappmittel ausgebildet, wobei es über mehrere Schnappelemente am Rahmenrohr festschnappbar ist. Auf detaillierte Ausführungsformen wird im Folgenden noch eingegangen.

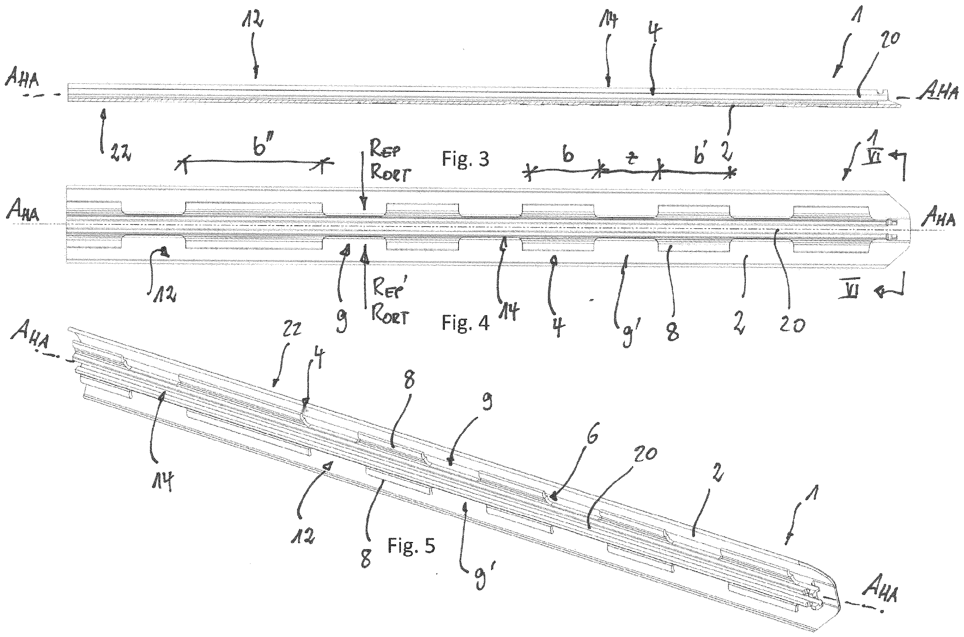

Wie insbesondere in den Figs. 3 bis 6 dargestellt, weist die Montageseite 12 wenigstens ein Klemmmittel 4 zur Fixierung wenigstens eines zuvor genannten Kabelzuges 102 auf, beispielsweise eines Schalt- und/oder Bremszuges, eines Kabels oder jeder anderen Art von Kabelzug wie er hier beschreiben wurden und insbesondere, wie er mit der zuvor beschriebenen Stellelement-Aktuator-Einheit 110 beschrieben wurde. Die Fixierung des Kabelzuges 102 erfolgt in einem Klemmraum 6 am Abdeckelement 2. Das zugehörige Klemmmittel 4 ist dabei so ausgebildet, dass eine Fixierung am Abdeckelement erfolgen kann, bevor der Rahmenrohrschutz am zu schützenden Rahmenrohr befestigt ist. Nach dem Einführen des Kabelzuges und eventuell daran angeschlossener Stellelemente und Aktuatoren erfolgt über das Befestigungsmittel die lösbare Befestigung der Einheit aus Rahmenrohrschutz und Kabelzug am schützenden Rahmenrohr. Das Abdeckelement und die Klemmmittel sind dabei derart ausgebildet, dass der am Abdeckelement befestigte Kabelzug währen der Montage am Rahmenrohr vorausgerichtet am Abdeckmittel ausgerichtet verbleibt und so sicher und in seiner gewünschten Ausrichtung am Rahmenrohr montiert werden kann.

Wie insbesondere in Fig. 1 dargestellt, kann auf diese Weise ein Schutz des Unter-rohres bei gleichzeitiger und sehr schneller Montage der Stellelement-Aktuator-Einheit erfolgen. Wichtig ist dabei, dass die Fixierung am Abdeckelement dergestalt ist, dass der fixierte Kabelzug zusammen mit dem Abdeckelement am Rahmenrohr, insbesondere dem Unterrohr 101, befestigbar ist.

Optional ist dabei das Klemmmittel als Schnappbefestigungsmittel zur Schnappfixierung des wenigstens einen Kabelzuges 102 im Klemmraum 6 ausgeführt. Insbesondere erfolgen die Fixierung im Klemmraum und insbesondere die Schnappfixierung werkzeuglos, sodass der Kabelzug 102 einfach in seine Klemmfixierung am Abdeckelement gebracht werden kann. Der Klemmraum 6 ist dabei optional so ausgebildet, dass er sich entlang der Haupterstreckungsrichtung A_{HA} des Abdeckelementes erstreckt. Wie insbesondere in den Figs. 3 bis 5 ersichtlich, kann auf diese Weise ein Kabelzug 102 entlang der Haupterstreckungsachse A_{HA} geführt werden.

Das Klemmmittel weist optional wenigstens einen Klemmfortsatz 8 auf, über den ein Kabelzug festgeklemmt werden kann. Der Klemmraum wird dabei beispielsweise zwischen dem Klemmfortsatz 8 und der Montageseite 12 ausgebildet. Das Klemm-mittel kann dabei insbesondere so ausgebildet sein, dass wenigstens ein Kabelzug entlang einer zur Montageseite 12 ebenen parallel verlaufenden Einführrichtung R_{EP} und/oder zur Haupterstreckungsrichtung A_{HA} des Abdeckelementes orthogonal verlaufenden Einführrichtung R_{ORT} in den Klemmraum einführbar und dort fixierbar ist. Diese Einführrichtungen sind insbesondere in den Figs. 4, 6 und 8 dargestellt. Hinsichtlich der Ausrichtungen und der Bedeutung von orthogonal und parallel wird auf den allgemeinen Teil dieses Schriftsatzes verwiesen. Wie nämlich in Fig. 6 dargestellt, kann diese Einführrichtung eine sich verändernde Richtung sein, nämlich eine der Geometrie der Montageseite folgende Richtung. Wie in Fig. 6 dargestellt, kann die Einführrichtung R_{EP}, R_{ORT} dem Verlauf der Mittelachse Ax des Abdeckelementes 2 entlang seinem Querschnitt entsprechen.

Eine ähnliche Ausführungsform ist auch in Fig. 8 dargestellt, wobei hier exemplarisch die sich ändernden Einführrichtungen an unterschiedlichen Positionen entlang der gekrümmt verlaufenden Mittelachse Ax des Abdeckelementes dargestellt sind.

Wie insbesondere in Fig. 6 erkennbar, ist optional der Klemmfortsatz parallel zur Montageseite 12 des Abdeckelementes 2 und von dieser beabstandet ausgeführt. Auch hier gilt die zuvor genannte Definition von parallel optional. Der Klemmfortsatz ist optional entlang einer zur Montageseite orthogonalen Klemmachse A_{K} elastisch ausgeführt. Diese Klemmachse A_{K} ist ebenfalls in Fig. 6 dargestellt.

Es sei angemerkt, dass für sämtliche Positionsangaben optional ein Wesentlichkeitserfordernis gilt, dass also im Wesentlich orthogonal, im Wesentlichen parallel, im Wesentlichen folgend angenommen werden kann etc.

Durch die elastische Ausführung des Klemmfortsatzes 8 kann ein schnappendes Fixieren des Kabelzuges 102 im Klemmraum 6 erreicht werden. Auf diese Weise können auch Kabelzüge mit sehr starrer Außengeometrie sicher im Klemmraum 6 fixiert werden.

Wie in den Figs. 6 und 8 dargestellt, weist optional der Klemmfortsatz und/oder die Montageseite bzw. das Klemmmittel 4 wenigstens einen zur Außengeometrie des Kabelzuges 102 wenigstens abschnittsweise komplementär ausgebildeten Kabelzugführungskanal 10 auf. Hier gilt das im allgemeinen Teil Beschriebene. An Randbereichen der Kabelzugführungskanäle 10 sind Schnappelemente optional vorgesehen, die es beim Einführen des Kabelzuges 2 in den Klemmraum 6 und/oder beim Entnehmen aus dem Klemmraum zu überwinden gilt.

Wie insbesondere in den Figs. 4 bis 6 dargestellt, sind an der Montageseite 12 wenigstens zwei Klemmmittel 4 vorgesehen, die relativ zur Haupterstreckungsachse A_{HA} des Abdeckelementes jeweils links- und rechtsseitig angeordnet sind und insbesondere wenigstens abschnittsweise zur Haupterstreckungsachse A_{HA} des Abdeckelementes spiegelsymmetrisch angeordnet sind.

Entlang der Haupterstreckungsachse A_{HA} des Abdeckelementes sind optional eine Mehrzahl an voneinander beabstandeten Klemmfortsätzen 8 ausgebildet. Dies ist insbesondere in den Figs. 4 und 5 erkennbar. Optional sind die Klemmfortsätze 8 so ausgebildet, dass der im Klemmraum 6 geführte Kabelzug von diesen Klemmfortsätzen entlang wenigstens 30 %, optional wenigstens 50 % und weiter optional wenigstens 60 % seiner Erstreckungslänge entlang des Abdeckelementes 2 im Klemmraum festgeklemmt ist. Diese Ausführungsform ist in Fig. 4 mit den Bezugszeichen b, z beschriftet. b stellt dabei die Breite b eines Klemmfortsatzes 8 dar, der einen im Klemmraum 6 geführten Kabelzug (siehe Fig. 7) fixiert. Zwischen zwei benachbarten Klemmfortsätzen 8 ist über einen Bereich z kein Klemmfortsatz vorgesehen. Eine entsprechende Ausgestaltung erlaubt ein einfaches Einsetzen des Kabelzuges 102 und führt darüber hinaus zu einer Gewichtsersparnis. Weiter ist es möglich, über diese Bereiche z Kabelzüge beispielsweise richtungsändernd abzuführen, wenn beispielsweise eine Sattelstütze oder ein anderes Bauteil mit dem Kabelzug versorgt werden muss.

Wie in Fig. 6 dargestellt, weist optional das Befestigungsmittel 14 wenigstens einen Befestigungsfortsatz 16 auf. Dieser Befestigungsfortsatz 16 erstreckt sich optional von der Montageseite 12 des Abdeckelementes in Richtung des zu schützenden Rahmenrohres 101. Er ist optional lösbar arretierend in eine komplementär ausgebildete Befestigungsfortsatzaufnahme 106 am Rahmenrohr 101 fixierbar bzw. in diese einführbar. Dies ist in Fig. 7 dargestellt.

Weiter optional ist das Befestigungsmittel 14 als ein Schnappmittel zur werkzeuglosen Befestigung des Abdeckelementes 2 am Rahmenrohr 101 ausgebildet. Insbesondere ist es hier möglich, und dies ist exemplarisch in Fig. 7 dargestellt, dass der Befestigungsfortsatz 16 einen Kugel- oder dergleichen Volumenkopf aufweist, der in eine komplementär dazu ausgebildete Befestigungsfortsatzaufnahme 106 am Rahmenrohr werkzeuglos einschnappbar und/oder ausschnappbar ist. Bei der in Fig. 7 dargestellten Ausführungsform kann dazu beispielsweise die Befestigungsfortsatzaufnahme 106 als Gummitülle vorgesehen sein, die eine elastische Aufnahme des Befestigungsfortsatzes 16 bzw. seines Kugel- oder dergleichen Volumenkopfes 18 erlaubt. Befestigungsfortsatzaufnahme 106 ist in einer Öffnung, insbesondere Bohrung 108 im Rahmenrohr aufgenommen und verschließt diese optional fluiddicht. Auf diese Weise können einfach und insbesondere mittels einer simplen Bohrung Befestigungsfortsatzaufnahmen 106 im Rahmenrohr ausgebildet werden.

Es ist möglich, dass der Befestigungsfortsatz 16 derart ausgebildet ist, dass er an unterschiedlichen Positionen, insbesondere an unterschiedlichen Positionen entlang der Haupterstreckungsachse A_{HA} am Abdeckelement befestigbar ist. Dazu weist beispielsweise, wie insbesondere in den Figs. 4, 5 und 6 dargestellt, das Abdeckelement 2 bzw. das Befestigungsmittel 14 wenigstens eine Montagenut 20 zur Aufnahme wenigstens eines Nutensteins 22 auf, über den der Befestigungsfortsatz 16 am Abdeckelement festlegbar ist. Eine solche Ausführungsform erlaubt das Lösen des Befestigungsfortsatzes 16 in seiner Arretierung in der Montagenut 20 und das Verschieben entlang der Montagenut 20.

Wie in Fig. 6 dargestellt, ist bei dieser Ausführungsform das Klemmmittel optional integral am Abdeckelement 2 ausgebildet. Selbiges gilt für wenigstens ein Bauteil des Befestigungsmittels und insbesondere die Montagenut 20, die ebenfalls optional integral mit dem Abdeckelement ausgebildet ist. Optional ist das Abdeckelement 2 als Strangpressprofil ausgebildet, wobei es bei Bedarf auf die geforderte Länge 1 abgelängt werden kann bzw. ist.

Das Klemmmittel und insbesondere sein Klemmfortsatz 8 sind optional integral an einem Element des Befestigungsmittels ausgebildet, beispielsweise an der Montagenut 20, wie dies in Fig. 6 dargestellt ist. In der Zusammenschau ergibt sich ein Bauteil, das sehr kostengünstig produziert und auf Lager gehalten werden kann.

Fig. 8 zeigt eine weitere Ausführungsform des erfindungsgemäßen Rahmenrohr-schutzes im Querschnitt gemäß der Schnittführung, wie sie in Fig. 4 dargestellt ist. Der Rahmenrohrschutz entspricht dem zuvor beschriebenen Rahmenrohrschutz, allerdings ist bei dieser Ausführungsform das Klemmmittel 4 nicht integral mit dem Abdeckelement 2 ausgeführt. Optional ist insbesondere in diesem Zusammenhang das Klemmmittel 4 entlang der Haupterstreckungsachse A_{HA} des Abdeckelementes 2 verschieblich angeordnet. Insbesondere in diesem Zusammenhang ist es denkbar, das Klemmmittel 4 zusammen mit dem Befestigungsfortsatz 16 des Befestigungsmittels 14 über einen Nutenstein 24 in der Montagenut 20 verschiebbar fixierbar auszubilden. Bei einer solchen Ausführungsform kann beispielsweise das Klemmmittel 4 bzw. sein Klemmfortsatz 8 oder mehrere Klemmfortsätze 8 nicht elastisch ausgebildet werden. Über ein Festlegen des Klemmmittels 4 gegen das Abdeckelement und insbesondere die Montagenut 20 kann bei einem entsprechend ausgebildeten Klemmmittel 4 eine Festlegung des Kabelzuges 102 erfolgen. Auf diese Weise kann ein Einführen des Kabelzuges 102 in den Klemmraum 6 zur Verfügung gestellt werden, ohne dass eine Einführkraft, eine Schnappkraft etc. überschritten werden muss bzw. nötig ist.

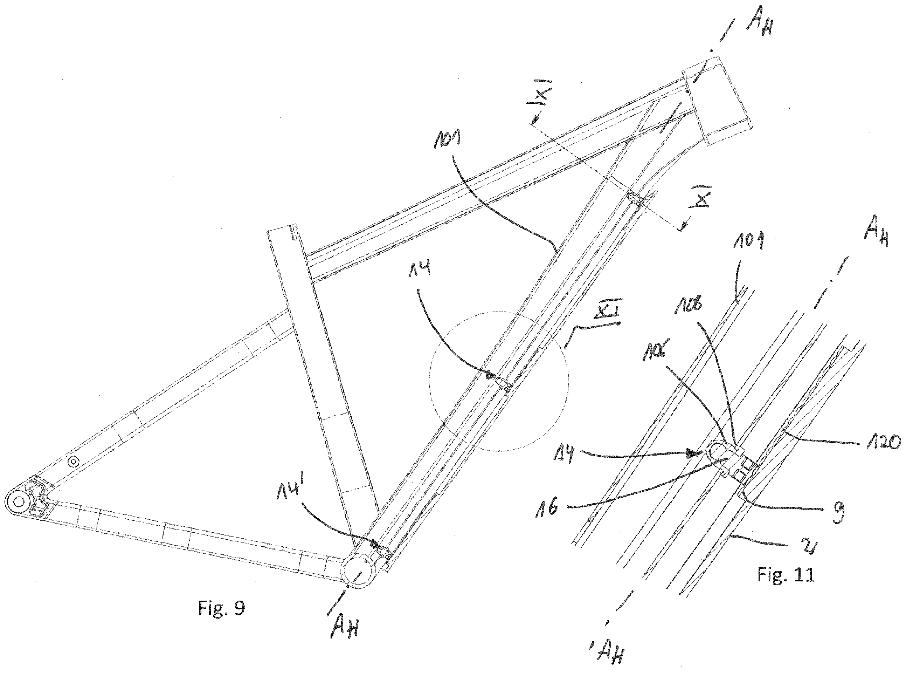

Die Figuren 9 - 15 zeigen eine weitere Ausführungsform des Rahmenrohrschutzes 1 bzw. eines Rahmens des hier beschriebenen Fahrrads. Es sei erwähnt, dass sämtliche Merkmale der zuvor beschriebenen Ausführungsform mit einem oder mehreren Markmalen der nun beschriebenen Ausführungsform kombinierbar sind. Dies gilt für einzelne Merkmale als auch für eine Mehrzahl dieser Merkmale.

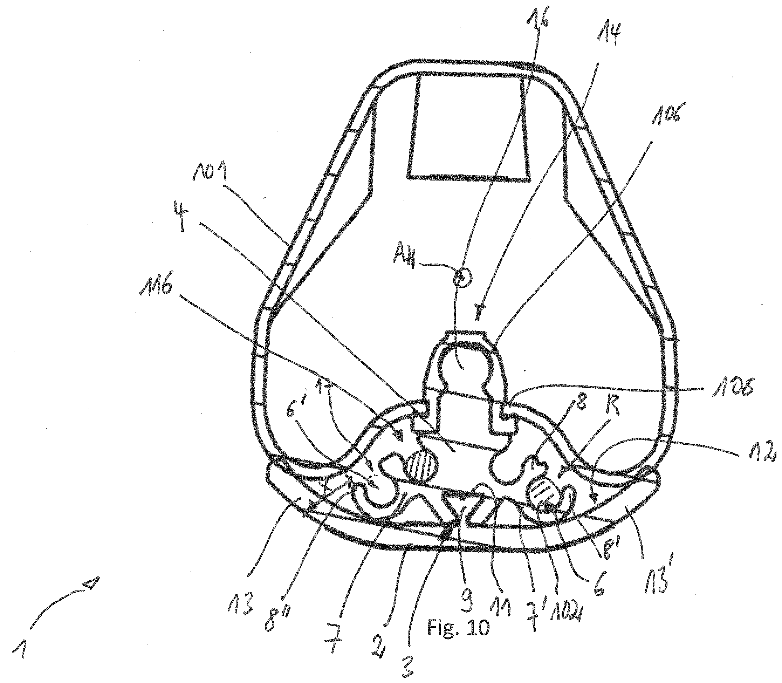

In seiner grundsätzlichen Funktionsweise entspricht der in den Figuren 9 - 15 gezeigte Rahmenrohrschutz dem zuvor beschriebenen Rahmenrohrschutz, jedoch ist bei der hier dargestellten Ausführungsform das Klemmmittel 4, mittels einer Klemmmittelbefestigung 3, am Abdeckelement 2 insbesondere lösbar befestigbar. Wie insbesondere in Figur 10 dargestellt, kann das Abdeckelement 2 vom Klemmmittel 4 gelöst werden bzw. das Klemmmittel 4 über die Klemmmittelbefestigung 3 am Abdeckelement 2 und insbesondere an seiner Montageseite 12 befestigt werden.

Zur Befestigung des Rahmenrohrschutzes 1 am Rahmenrohr 101 und insbesondere um das Klemmmittel 4 am Rahmen aufzunehmen, weist das Rahmenrohr optional eine Aufnahme 116 auf, die hier in Form einer Vertiefung 116 ausgebildet ist, die sich optional entlang eines überwiegenden Teil des Rahmenrohrs und insbesondere entlang dessen Haupterstreckungsachse erstreckt. Es ist auch möglich, diese Aufnahme 116 nur in dedizierten Bereichen am Rahmenrohr vorzusehen und insbesondere da, wo das Klemmmittel und/oder das Befestigungsmittel im montierten Zustand am Rahmenrohr befestigt ist. Die Längserstreckung dieser Aufnahme kann optional maximal 200%, insbesondere optional maximal 150% und weiter optional maximal 120% der Längserstreckung des Klemmmittels betragen.

Das Befestigungsmittel 14 ist bei dieser Ausführungsform wieder mit einem Befestigungsfortsatz 16 ausgebildet, der in eine komplementär ausgebildete Befestigungsfortsatzaufnahme 106 eingreift. Hier gilt das bei der zuvor beschriebenen Ausführungsform Beschriebene identisch. Jedoch ist hier der Befestigungsfortsatz 14 optional integral mit dem Klemmmittel 4 ausgebildet. Dies ist ebenfalls in Figur 10 erkennbar. Die bei dieser Ausführungsform vorgesehene Klemmmittelbefestigung 3 weist optional einen Befestigungsfortsatz 9 am Abdeckelement 2 und wenigstens eine dazu komplementäre Fortsatzaufnahme 11 am Klemmmittel 4 auf (oder umgekehrt). Insbesondere ist es denkbar, dass der Befestigungsfortsatz eine Klemmmittelschiene 9 ist, die am Abdeckelement vorgesehen ist. Im Folgenden wird für den Befestigungsfortsatz 9 am Abdeckelement 2 alternativ der Begriff Klemmmittelschiene 9 verwendet. Die Klemmmittelschiene 9 erstreckt sich optional abschnittsweise entlang der Haupterstreckungsachse A_{H} des Abdeckelements 2. Dies bedeutet, dass der größere Teil der Klemmmittelschiene sich entlang der Haupterstreckungsachse A_{HA} des Abdeckelements 2 erstreckt. Die Fortsatzaufnahme 11 weist optional zur Klemmmittelschiene 9 komplementär ausgebildete Schienenaufnahme 11 auf. Im Folgenden wird für den Begriff Fortsatzaufnahme 11 am Klemmmittel alternativ der Begriff Schienenaufnahme 11 verwendet. Auf dieser Schienenaufnahme ist optional die Klemmmittelschiene 9 fixierend befestigbar.

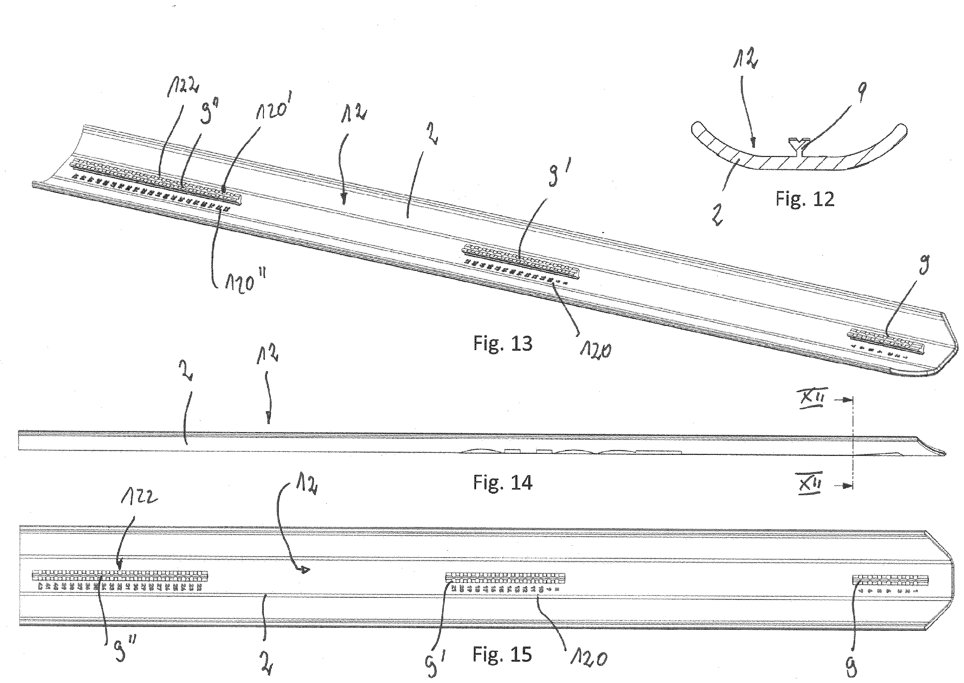

Die Klemmmittelschiene 9 ist insbesondere in den Figuren 12 - 15 im Detail dargestellt. Insbesondere ist erkennbar, dass die Klemmmittelschiene 9 optional derart komplementär zur Schienenaufnahme 11 ausgebildet sein kann, dass eine Längsverschieblichkeit entlang der Haupterstreckungsachse des Abdeckelementes und/oder eine Fixierung des Klemmmittels 4 am Abdeckelement 2 an unterschiedlichen Positionen entlang der Klemmmittelschiene gewährleistet werden kann.

Bei dieser Ausführungsform ist optional die Klemmmittelbefestigung 3 so ausgebildet, dass das Klemmmittel 4 mit seiner Schienenaufnahme 11 insbesondere längsverschieblich, und hier optional entlang der Haupterstreckungsachse A_{HA} des Abdeckelements verschoben werden kann. Auf diese Weise kann das Klemmmittel 4 bzw. der Befestigungsfortsatz 16 des Befestigungsmittels 14 an unterschiedlichen Positionen am Abdeckelement 2 festgelegt werden. Auf diese Weise kann das Abdeckelement 2 u.a. variabel an unterschiedlichen Fahrradrahmen bzw. Rahmenrohren bzw. an unterschiedlich positionierte Befestigungsfortsatzaufnahmen 16 befestigt werden.

Zur Erleichterung des Findens der hierfür notwendigen Montageposition weist, wie insbesondere in der Figuren 13 - 15 gezeigt, das Abdeckelement 2 Positions-Visualisierungsmittel 120 und insbesondere wenigstens eine Skala zur Visualisierung und/oder Festlegung unterschiedlicher vordefinierter potenzieller Montagepositionen für das Klemmmittel und/oder das Befestigungsmittel auf. Wie oben beschrieben kann das Positions-Visualisierungsmittel Rast- oder dergleichen Mittel 122 aufweisen, die eine haptische Visualisierung unterschiedlicher Montagepositionen ermöglichen. So kann beispielsweise das Positions-Visualisierungsmittel Rastfortsätze an der Klemmmittelschiene aufweisen, die mit Rastgegenfortsätzen an der Schienenaufnahme zusammenarbeiten und so im Rastzustand wenigstens eine, vorzugsweise eine Mehrzahl and Montageposition definieren bzw. dem Benutzer kenntlich machen.

Wie in den Figuren 10 und 12 dargestellt, kann der Befestigungsfortsatz 9 bzw. die entsprechend ausgebildete Klemmschiene 9 eine Hinterschneidungsfläche aufweisen und die Fortsatzaufnahme 11 bzw. die entsprechend ausgebildete Schienenaufnahme 11 eine dazu komplementär ausgebildete Gegenhinterschneidungsfläche. Im eingesetzten Zustand, also wenn der Befestigungsfortsatz in die Fortsatzaufnahme einragt, kann durch eine zwischen Klemmmittel 4 und Abdeckelement 2 aktivierte Kraft, beispielsweise eine auf das Klemmmittel 4 wirkende Zugkraft, die das Klemmmittel vom Abdeckelement wegdrängt, eine Fixierung des Klemmmittels in seiner Position relativ zum Abdeckelement 2 erreicht werden. Beispielsweise erfolgt diese Aktivierung über Aktivierung einer Haftreibung zwischen dem Befestigungsfortsatz und der Fortsatzaufnahme und insbesondere mittels zuvor beschriebener Hinterschneidungs- und Gegenhinterschneidungsflächen.

In einer Zusammenschau der Figuren 10 bis 15 wird deutlich, dass das Klemmmittel 4 relativ zum Abdeckelement 2 längsverschieblich am Abdeckelement ausgebildet sein kann. Es ist denkbar, die Klemmmittelbefestigung 3 derart auszubilden, dass die Klemmschiene 9, in einem Zustand in dem das Abdeckelement 2 nicht am Rahmenrohr montiert ist, längsverschieblich in der Schienenaufnahme 11 gehalten ist, und in einem montierten Zustand nicht längsverschieblich gehalten bzw. fixiert ist. Diese Fixierung kann durch eine Aktivierung einer Reibungskraft, beispielsweise mittels einer Zugkraft, die das Klemmmittel vom Abdeckelement wegdrängt, erfolgen. Diese Zugkraft kann optional über einen im Folgenden beschriebenen Federvorsprung 7 und/oder Abdeckelement-Federvorsprung 13 aktiviert werden:
Wie insbesondere in Figur 10 dargestellt, weist das Klemmmittel 4 optional wenigstens einen Federvorsprung 7 oder dergleichen wirkendes Federelement auf, der das Klemmmittel 4 gegen eine zwischen Klemmmittelbefestigung 3 und Abdeckelement 2 wirkende Haltekraft vorspannt. Durch dieses Federelement 7 wird beispielsweise das Klemmmittel 4 vom Abdeckelement 2 weggedrängt, wodurch optional eine Fixierung der Position des Klemmmittels 4, relativ zum Abdeckelement 2, in der Klemmmittelbefestigung 3 erfolgt.

Darüber hinaus ist es denkbar, das Abdeckelement 2 wenigstens einem Abdeckelement-Federvorsprung 13 aufweist oder ein dergleichen wirkendes Abdeckelement-Federelement, das das Abdeckelement, im am Rahmenrohr montierten Zustand (siehe Figur 10), vom Rahmenrohr wegdrängt und insbesondere derart wegdrängt, dass eine Zugkraft im Befestigungsmittel 14 zwischen Rahmenrohr und Abdeckelement aktiviert wird. Auch ist es denkbar, dass der Abdeckelement-Federvorsprung oder das dergleichen wirkende Abdeckelement-Federelement derart ausgebildet ist, dass das Abdeckelement im am Rahmenrohr montierten Zustand vom Rahmenrohr weggedrängt wird und zwar derart, dass das Klemmmittel 4 gegen eine in der Klemmmittelbefestigung 3 wirkende Zugkraft gegen das Abdeckelement 2 vorgespannt wird.

Grundsätzlich ist es denkbar, das Abdeckelement-Federelement so auszubilden, dass eine Vorspannung zwischen Abdeckelement 2 und Rahmenrohr 101 aufgebracht wird, um eine spielfreie Lagerung des Abdeckelements 2 am Rahmenrohr 101 zu gewährleisten.

Insbesondere in Figur 4 erkennbar, ist das Klemmmittel 4 optional derart ausgebildet, dass wenigstens ein Kabelzug 102 entlang einer orthogonal zu seiner Haupterstreckungsrichtung A_{HK} (hier senkrecht zur Bildebene verlaufend) verlaufenden Einführrichtung R in den Klemmraum 6 einführbar und dort gehalten ist. Insbesondere ist es denkbar, dass das Klemmmittel 4 als Schnappklemmmittel ausgebildet ist, insbesondere zum werkzeuglosen Festklemmen wenigstens eines Kabelzugs 102. Insbesondere ist es auch denkbar, wenigstens einen Klemmfortsatz 8 am Klemmmittel vorzusehen, zum Festklemmen wenigstens eines Kabelzugs 102 im Klemmraum 6. Es ist denkbar, dass der wenigstens eine Klemmfortsatz 8 federelastisch ausgebildet oder federelastisch gelagert, beispielsweise an dem zuvor beschriebenen Federelement 7, ausgebildet ist.

Der Klemmraum6 zur Aufnahme des Kabelzugs verfügt vorzugsweise über eine Einsetzöffnung 17 zum Einführen des wenigstens einen Kabelzugs. Das Klemmmittel 4 ist vorzugsweise derart elastisch ausgebildet, dass diese Einführöffnung 17 elastisch vergrößert werden kann (hier beispielswiese durch eine Bewegung des Klemmfortsatzes 8 in Richtung X), um den Kabelzug in den Klemmraum einzuführen und/oder verkleinert werden kann, um den Kabelzug im Klemmraum zu halten. Hierzu kann beispielsweise der den Klemmraum optional bildende Klemmfortsatz 8 elastisch ausgebildet oder gelagert sein.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein; mehrere "Mittel" können durch denselben Gegenstand bzw. unterschiedliche Gegenstände oder implementierte Struktur oder Funktion dargestellt werden; beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Ansprüchen aufgeführt werden, soll nicht angeben, dass eine Kombination dieser Maßnahmen nicht vorteilhafterweise eingesetzt werden kann. Insbesondere sollen alle funktionierenden Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

## Patentansprüche

1. Rahmenrohrschutz (1) zum lösbaren Anbringen an ein zu schützendes Rahmenrohr (101) und insbesondere Unterrohr eines Fahrradrahmens (100), umfassend
ein insbesondere einstückiges Abdeckelement (2), dass derart ausgebildet ist, dass es sich im montierten Zustand des Rahmenrohrschutzes (1) am Fahrradrahmen (100) entlang des zu schützenden Rahmenrohres (101) erstreckt und dabei eine dem Rahmenrohr (101) zugewandte Montageseite (12) und eine dem Rahmenrohr (101) abgewandte Außenseite (22) aufweist,
wobei die Montageseite (12) folgendes aufweist:
wenigstens ein Klemmmittel (4) zur Fixierung wenigstens eines Kabelzuges (102), beispielsweise eines Schalt- und/oder Bremszuges, in einem Klemmraum (6) am Abdeckelement (2), bevor der Rahmenrohrschutz (1) am zu schützenden Rahmenrohr (101) befestigt ist,
**gekennzeichnet durch**
wenigstens ein Befestigungsmittel (14) zur lösbaren Befestigung des Rahmenrohrschutzes (1) zusammen mit dem im Klemmraum (6) fixierten Kabelzug (102) am zu schützenden Rahmenrohr (101), wobei
das Befestigungsmittel (14) wenigstens einen Befestigungsfortsatz (16) aufweist, der sich von der Montageseite (12) des Abdeckelementes (2) in Richtung des zu schützenden Rahmenrohres (101) erstreckt und lösbar arretierend in eine Befestigungsfortsatzaufnahme (106) am Rahmenrohr (101) einführbar ist.

2. Rahmenrohrschutz nach Anspruch 1,
**dadurch gekennzeichnet, dass**
das Klemmmittel (4) als Schnappklemmmittel ausgebildet ist, insbesondere zum werkzeuglosem Festklemmen wenigstens eines Kabelzuges (102), und insbesondere wenigstens einen Klemmfortsatz (8) aufweist, zum Festklemmen wenigstens eines Kabelzuges (102) im Klemmraum (6).

3. Rahmenrohrschutz nach Anspruch 1 oder 2,
**dadurch gekennzeichnet, dass**
das Klemmmittel (4) mittels einer Klemmmittelbefestigung (3) am Abdeckelement (2) insbesondere lösbar befestigbar ist.

4. Rahmenrohrschutz nach einem der vorhergehenden Ansprüche,
**dadurch gekennzeichnet, dass**
die Klemmmittelbefestigung (3) wenigstens einen Befestigungsfortsatz am Abdeckelement und wenigstens eine dazu komplementäre Fortsatzaufnahme am Klemmmittel (4) aufweist, oder umgekehrt, wobei insbesondere der Befestigungsfortsatz eine Klemmmittelschiene (9) am Abdeckelement (2) aufweist, die sich insbesondere abschnittsweise entlang der Haupterstreckungsachse A_{HA} des Abdeckelementes (2) erstreckt, und die Fortsatzaufnahme eine zur Klemmmittelschiene (9) komplementär ausgebildete und darauf fixierend befestigbare Schienenaufnahme (11) am Klemmmittel aufweist.

5. Rahmenrohrschutz nach einem der vorhergehenden Ansprüche
**dadurch gekennzeichnet, dass**
das Klemmmittel (4) wenigstens einen Federvorsprung oder dergleichen wirkendes Federelement (7) aufweist, der das Klemmmittel (4) gegen eine zwischen Klemmmittelbefestigung (3) und Abdeckelement (2) wirkende Haltekraft vorspannt.

6. Rahmenrohrschutz nach Anspruch 5,
**dadurch gekennzeichnet, dass**
das Klemmmittel (4) als Schnappklemmmittel ausgebildet ist, insbesondere zum werkzeuglosem Festklemmen wenigstens eines Kabelzuges (102), und wenigstens einen Klemmfortsatz (8) aufweist, zum Festklemmen wenigstens eines Kabelzuges (102) im Klemmraum (6), wobei der wenigstens eine Klemmfortsatz (8) am Federelement (7) ausgebildet ist.

7. Rahmenrohrschutz nach Anspruch 1,
**dadurch gekennzeichnet, dass** das Klemmmittel (4) insbesondere entlang der Haupterstreckungsachse A_{HA} des Abdeckelementes (2) an unterschiedlichen Positionen am Abdeckelement positionierbar ist.

8. Rahmenrohrschutz nach einem der vorhergehenden Ansprüche,
**dadurch gekennzeichnet, dass**
das Klemmmittel (4) derart ausgebildet ist, dass wenigstens ein Kabelzug (102) entlang einer orthogonal zu seiner Haupterstreckungsrichtung A_{HK} verlaufenden Einführrichtung R in den Klemmraum (6) einführbar und dort gehalten ist.

9. Rahmenrohrschutz nach einem der vorhergehenden Ansprüche,
**dadurch gekennzeichnet, dass**
an der Montageseite (12) wenigstens abschnittsweise entlang der Haupterstreckungsachse wenigstens zwei Klemmräume (6) vorgesehen sind, die relativ zur Haupterstreckungsachse A_{HA} des Abdeckelementes (2) jeweils links und rechtsseitig angeordnet sind und insbesondere wenigstens abschnittsweise zur Haupterstreckungsachse A_{HA} des Abdeckelementes (2) spiegelsymmetrisch angeordnet sind.

10. Rahmenrohrschutz nach einem der vorhergehenden Ansprüche,
**dadurch gekennzeichnet, dass**
das Befestigungsmittel (14) ein Schnappmittel zur werkzeuglosen Befestigung des Abdeckelementes (2) am Rahmenrohr (101) aufweist, insbesondere wobei der Befestigungsfortsatz (16) einen Kugel- oder dergleichen Volumenkopf (18) aufweist, der in eine komplementär dazu ausgebildete Befestigungsfortsatzaufnahme (106) am Rahmenrohr werkzeuglos einschnappbar und/oder ausschnappbar ist.

11. Rahmenrohrschutz nach einem der vorhergehenden Ansprüche,
**dadurch gekennzeichnet, dass**
der Befestigungsfortsatz (16) an unterschiedlichen Montagepositionen, insbesondere an unterschiedlichen Positionen entlang der Haupterstreckungsachse A_{HA} am Abdeckelement (2) befestigbar ist.

12. Rahmenrohrschutz nach einem der vorhergehenden Ansprüche,
**dadurch gekennzeichnet, dass**
das Abdeckelement Positions-Visualisierungsmittel und insbesondere wenigstens eine Skala zur Visualisierung und/oder Festlegung unterschiedlicher vordefinierter potentieller Montagepositionen für das Klemmelement und/oder das Befestigungsmittel aufweist.

13. Rahmenrohrschutz nach einem der vorhergehenden Ansprüche,
**dadurch gekennzeichnet, dass**
wenigstens ein Teil des Befestigungsmittel am Klemmmittel angeordnet, insbesondere integral mit dem Klemmmittel ausgebildet ist.

14. Fahrrad, mit wenigstens einem Fahrradrahmen (100), an dem wenigstens ein Aktuator (114) und eine Stellelement (112) vorgesehen sind, die über wenigstens einen Kabelzug (102) miteinander verbunden sind, weiter umfassend wenigstens einen Rahmenrohrschutz (1) nach einem der vorhergehenden Ansprüche.

## Claims

1. Frame tube protection (1) for detachable attachment to a frame tube (101) to be protected and in particular a down tube of a bicycle frame (100), comprising in particular a one-piece cover element (2), which is designed such that it extends along the frame tube (101) to be protected when the frame tube protection (1) is mounted on the bicycle frame (100) and in this case has a mounting side (12) facing towards the frame tube (101) and an outer side (22) facing away from the frame tube (101), wherein the mounting side (12) has the following: at least one clamping means (4) for fixing at least one cable pull (102), for example a switching and/or brake cable pull, in a clamping space (6) on the cover element (2) before the frame tube protection (1) is fastened to the frame tube (101) to be protected, **characterised by** at least one fastening means (14) for detachably fastening the frame tube protection (1), together with the cable pull (102) fixed in the clamping space (6), to the frame tube (101) to be protected, wherein the fastening means (14) has at least one fastening extension (16), which extends from the mounting side (12) of the cover element (2) in direction to the frame tube (101) to be protected and can be introduced into a fastening extension receptacle (106) on the frame tube (101) in a detachably locking manner.

2. Frame tube protection according to claim 1, **characterised in that** the clamping means (4) is designed as a snap-on clamping means, in particular for tool-free clamping of at least one cable pull (102), and in particular has at least one clamping extension (8), for clamping at least one cable pull (102) in the clamping space (6).

3. Frame tube protection according to claim 1 or 2, **characterised in that** the clamping means (4) can in particular be detachably fastened to the cover element (2) by means of a clamping means fastening (3).

4. Frame tube protection according to any one of the preceding claims, **characterised in that** the clamping means fastening (3) has at least one fastening extension on the cover element and at least one complementary extension recess on the clamping means (4), or vice versa, wherein in particular the fastening extension has a clamping means rail (9) on the cover element (2), which extends in particular in sections along the main extension axis A_{HA} of the cover element (2), and the extension recess has a rail support (11) on the clamping means designed complementary to the clamping means rail (9) and which can be fastened thereon.

5. Frame tube protection according to any one of the preceding claims, **characterised in that** the clamping means (4) has at least one spring projection or similarly acting spring element (7) which pretensions the clamping means (4) against a holding force acting between the clamping means fastening (3) and the cover element (2).

6. Frame tube protection according to claim 5, **characterised in that** the clamping means (4) is designed as a snap-on clamping means, in particular for tool-free clamping of at least one cable pull (102), and has at least one clamping extension (8), for clamping at least one cable pull (102) in the clamping space (6), wherein the at least one clamping extension (8) is designed on the spring element (7).

7. Frame tube protection according to claim 1, **characterised in that** the clamping means (4) can be positioned at different positions on the cover element, in particular along the main extension axis A_{HA} of the cover element (2).

8. Frame tube protection according to any one of the preceding claims, **characterised in that** the clamping means (4) is designed such that at least one cable pull (102) can be introduced into the clamping space (6) along an introduction direction R orthogonal to its main extension direction A_{HK} and held there.

9. Frame tube protection according to any one of the preceding claims, **characterised in that** at least two clamping spaces (6) are provided on the mounting side (12) at least in sections along the main extension axis, which are arranged relative to the main extension axis A_{HA} of the cover element (2) on the left and right in each case and in particular are arranged mirror-symmetrically at least in sections relative to the main extension axis A_{HA} of the cover element (2).

10. Frame tube protection according to any one of the preceding claims, **characterised in that** the fastening means (14) has a snap means for tool-free fastening of the cover element (2) to the frame tube (101), in particular wherein the fastening extension (16) has a spherical head or head with the same volume (18), which can, without tools, be snapped into and/or snapped out of a fastening extension receptacle (106) designed complementarily thereto on the frame tube.

11. Frame tube protection according to any one of the preceding claims, **characterised in that** the fastening extension (16) can be fastened to the cover element (2) at different mounting positions, in particular at different positions along the main extension axis A_{HA}.

12. Frame tube protection according to any one of the preceding claims, **characterised in that** the cover element has position visualization means and in particular at least one scale for visualising and/or determining different predefined potential mounting positions for the clamping element and/or the fastening means.

13. Frame tube protection according to any one of the preceding claims, **characterised in that** at least one part of the fastening means is arranged on the clamping means, in particular integrally with the clamping means.

14. Bicycle, with at least one bicycle frame (100), on which at least one actuator (114) and one actuating element (112) are provided, which are connected to one another via at least one cable pull (102), further comprising at least one frame tube protection (1) according to any one of the preceding claims.

## Revendications

1. Protection de tube de cadre (1) pour l'application amovible à un tube de cadre (101) à protéger et en particulier un tube diagonal d'un cadre de bicyclette (100), comprenant
un élément de recouvrement (2) en particulier monobloc qui est réalisé de telle sorte qu'il s'étend le long du tube de cadre (101) à protéger à l'état monté de la protection de tube de cadre (1) sur le cadre de bicyclette (100) et présente alors un côté de montage (12) tourné vers le tube de cadre (101) et un côté extérieur (22) tourné à l'opposé du tube de cadre (101),
où le côté de montage (12) présente ce qui suit:
au moins un moyen de serrage (4) pour la fixation d'au moins une gaine de câble (102), par exemple une gaine de changement de vitesse et/ou de frein, dans un espace de serrage (6) sur l'élément de recouvrement (2), avant que la protection de tube de cadre (1) soit fixée au tube de cadre (101) à protéger,
**caractérisée par**
au moins un moyen de fixation (14) pour la fixation amovible de la protection de tube de cadre (1) avec la gaine de câble (102) fixée dans l'espace de serrage (6) sur le tube de cadre (101) à protéger, où
le moyen de fixation (14) présente au moins un prolongement de fixation (16) qui s'étend depuis le côté de montage (12) de l'élément de recouvrement (2) en direction du tube de cadre (101) à protéger et peut être inséré de manière amovible dans un logement de prolongement de fixation (106) sur le tube de cadre (101).

2. Protection de tube de cadre selon la revendication 1,
**caractérisée en ce que**
le moyen de serrage (4) est réalisé sous forme de moyen de serrage à encliquetage, en particulier pour le serrage à bloc sans outil d'au moins une gaine de câble (102), et en particulier présente au moins un prolongement de serrage (8) pour le serrage à bloc d'au moins une gaine de câble (102) dans l'espace de serrage (6).

3. Protection de tube de cadre selon la revendication 1 ou 2,
**caractérisée en ce que**
le moyen de serrage (4) peut être fixé sur l'élément de recouvrement (2) en particulier de manière amovible au moyen d'une fixation de moyen de serrage (3).

4. Protection de tube de cadre selon l'une des revendications précédentes,
**caractérisée en ce que**
la fixation de moyen de serrage (3) présente au moins un prolongement de fixation sur l'élément de recouvrement et au moins un logement de prolongement complémentaire de celui-ci sur le moyen de serrage (4), ou inversement, où en particulier le prolongement de fixation présente un rail de moyen de serrage (9) sur l'élément de recouvrement (2), qui s'étend en particulier par sections le long de l'axe d'extension principale A_{HA} de l'élément de couvercle (2), et le logement de prolongement présente sur le moyen de serrage un logement de rail (11) réalisé de manière complémentaire du rail de moyen de serrage (9) et qui peut être fixé sur celui-ci d'une manière qui le fixe.

5. Protection de tube de cadre selon l'une des revendications précédentes,
**caractérisée en ce que**
le moyen de serrage (4) présente au moins une saillie à ressort ou un élément à ressort (7) agissant de la même manière, qui précontraint le moyen de serrage (4) contre une force de maintien agissant entre la fixation de moyen de serrage (3) et l'élément de recouvrement (2).

6. Protection de tube de cadre selon la revendication 5,
**caractérisée en ce que**
le moyen de serrage (4) est réalisé sous forme de moyen de serrage à encliquetage, en particulier pour le serrage à bloc sans outil d'au moins une gaine de câble (102), et présente au moins un prolongement de serrage (8) pour le serrage à bloc d'au moins un gaine de câble (102) dans l'espace de serrage (6), où le au moins un prolongement de serrage (8) est réalisé sur l'élément à ressort (7).

7. Protection de tube de cadre selon la revendication 1,
**caractérisée en ce que**
le moyen de serrage (4) peut être positionné en particulier le long de l'axe d'extension principale A_{HA} de l'élément de recouvrement (2) à différentes positions sur l'élément de recouvrement.

8. Protection de tube de cadre selon l'une des revendications précédentes,
**caractérisée en ce que**
le moyen de serrage (4) est réalisé de telle manière qu'au moins une gaine de câble (102) peut être insérée dans l'espace de serrage (6) et est maintenue dans celui-ci le long d'une direction d'insertion R s'étendant orthogonalement à sa direction d'extension principale A_{HK}.

9. Protection de tube de cadre selon l'une des revendications précédentes,
**caractérisée en ce que**
du côté de montage (12), il est prévu au moins deux espaces de serrage (6) au moins par sections le long de l'axe d'extension principale, qui sont disposés respectivement du côté gauche et du côté droit par rapport à l'axe d'extension principale A_{HA} de l'élément de recouvrement (2) et qui sont disposés en particulier de manière symétrique par rapport à un miroir au moins par sections par rapport à l'axe d'extension principale A_{HA} de l'élément de recouvrement (2).

10. Protection de tube de cadre selon l'une des revendications précédentes,
**caractérisée en ce que**
le moyen de fixation (14) présente un moyen d'encliquetage pour la fixation sans outil de l'élément de recouvrement (2) sur le tube de cadre (101), en particulier où le prolongement de fixation (16) présente une tête sphérique ou une tête volumique (18) similaire, qui peut être introduite par encliquetage dans et/ou extraite d'un logement de prolongement de fixation (106) réalisé de manière complémentaire à celle-ci sur le tube de cadre.

11. Protection de tube de cadre selon l'une des revendications précédentes,
**caractérisée en ce que**
le prolongement de fixation (16) peut être fixé à l'élément de recouvrement (2) à différentes positions de montage, en particulier à différentes positions le long de l'axe d'extension principale A_{HA}.

12. Protection de tube de cadre selon l'une des revendications précédentes,
**caractérisée en ce que**
l'élément de recouvrement présente des moyens de visualisation de position et en particulier au moins une échelle pour la visualisation et/ou l'établissement de différentes positions de montage potentielles prédéfinies pour l'élément de serrage et/ou le moyen de fixation.

13. Protection de tube de cadre selon l'une des revendications précédentes,
**caractérisée en ce que**
au moins une partie du moyen de fixation est disposée sur le moyen de serrage, en particulier est réalisée d'une pièce avec le moyen de serrage.

14. Bicyclette avec au moins un cadre de bicyclette (100) sur lequel sont prévus au moins un organe d'actionnement (114) et un élément de réglage (112), qui sont reliés l'un à l'autre par l'intermédiaire d'au moins une gaine de câble (102), comprenant en outre au moins une protection de tube de cadre (1) selon l'une des revendications précédentes.
